# EUROPÄISCHE PATENTSCHRIFT

(11) **EP 1 203 044 B1**
(45) Veröffentlichungstag und Bekanntmachung des Hinweises auf die Patenterteilung: **01.10.2003**
(21) Anmeldenummer: 00949269.5
(22) Anmeldetag: 06.07.2000
(51) Int. Cl.: C08G 64/18, C08G 64/20, C08G 64/42, C08G 77/448, C08G 77/26, C08G 77/388, C08G 81/00, C08L 69/00

(54) **POLYCARBONATE MIT ASPARAGINSÄUREESTERFUNKTIONELLEN SILIKONEN**
POLYCARBONATES CONTAINING ASPARTIC ACID ESTER-FUNCTIONAL SILICONES
POLYCARBONATES CONTENANT DES SILICONES A FONCTION D'ESTER D'ACIDE ASPARTIQUE

(30) Priorität: 19.07.1999 DE 19933077; 19.07.1999 DE 19933129
(43) Veröffentlichungstag der Anmeldung: 08.05.2002
(73) Patentinhaber: Bayer Aktiengesellschaft, 51368 Leverkusen (DE)
(72) Erfinder: KÖHLER, Burkhard, D-51373 Leverkusen (DE); HORN, Klaus, D-41539 Dormagen (DE)
(86) Internationale Anmeldenummer: EP0006381
(87) Internationale Veröffentlichungsnummer: WO01005870

(56) Entgegenhaltungen:
- EP-A- 0 764 676
- EP-A- 0 924 231
- DE-A- 4 421 556
- US-A- 3 743 588
- US-A- 5 194 524

## Beschreibung

Die Erfindung betrifft aromatische Polycarbonate, enthaltend asparaginsäureesterfunktionelle Silikone, die sich durch eine sehr gute Tieftemperaturzähigkeit und ein sehr gutes ESC-Vcrhalten auszeichnen.

Aromatische Polycarbonate sind hochschlagzähe Kunststoffe, die sich durch eine sehr gute Raumtemperaturschlagzähigkeit auszeichnen. Nachteilig ist die Anfälligkeit gegen Lösungsmittel (Spannungsriss, ESC-Verhalten) und die nachlassende Kerbschlagzähigkcit bei Temperaturen unter 0°C.

Es wurde nun gefunden, dass aromatische Polycarbonate, enthaltend asparaginsäureesterfunktionelle Silikone, die sich durch Einbau der asparaginsäureesterfunktionellen Silikone während der Polycarbonatsynthese aus Bisphenolen und Kohlensäurederivaten oder durch Reaktion von unmodifizierten aromatischem Polycarbonat mit asparaginsäureesterfunktionellen Silikonen herstellen lassen, sich durch eine sehr gute Tieftemperaturzähigkeit und cin sehr gutes ESC-Verhalten auszeichnen.

Gegenstand der Erfindung sind daher aromatische Polycarbonate mit 1 bis 30 Gew.-%, vorzugsweise 5 bis 15 Gew.-%, asparaginsäüreesterfunktionellen Silikonen, erhältlich durch Reaktion von Bisphenolen und asparaginsäureesterfunktionellen Silikonen mit Kohlensäurederivaten oder durch Reaktion von Polycarbonaten mit asparaginsäureesterfunktionellen Silikonen.

Vorzugsweise werden asparaginsäureesterfunktionelle Silikone verwendet, die erhältlich sind durch Addition von Fumarsäureester und/oder Maleinsäureestern der Formel (I)

ROOC-CH=CH-COOR (I),

wobei R für einen C₁-C₄-Alkyl- oder Alkenylrest steht,
an aminofunktionelle Silikone.

Diese Verbindungen sind neu und ebenfalls Gegenstand der Erfindung.

Bevorzugte Verbindungen der Formel (I) sind Maleinsäure- oder Fumarsäuremethylester, Maleinsäure- oder Fumarsäureethylester, Maleinsäure- oder Fumarsäure-npropylester, Maleinsäure- oder Fumarsäureisopropylester, Maleinsäure- oder Fumarsäure-n-butylester, Maleinsäure- oder Fumarsäure-i-butylester, Maleinsäure- oder Fumarsäure-sec-butylester, Maleinsäure- oder Fumarsäure-tert-butylester, Maleinsäure- oder Fumarsäureallylester.

Die aminfunktionellen Silikone sind zugänglich durch Reaktion von offenkettigen Siloxanen und/oder zyklischen Oligosiloxanen, bei denen 45 bis 100 % der Substituenten an den Siloxangruppen Methylgruppen sind und der Rest vorzugsweise Phenylgruppen sind, mit Aminosilanen, vorzugsweise mit Aminosilanen der Formel (II)

H₂N-X-Si(OR)ₙ(CH₃)₃₋ₙ (II),

wobei
- R: der oben angegebenen Bedeutung entspricht,
- X: ein zweiwertiger organischer Rest mit 2 bis 22 Kohlenstoffatomen, vorzugsweise -CH₂-CH₂-CH₂- ist und
- n: 1 oder 2 oder 3, vorzugsweise 2 oder 3, ganz besonders bevorzugt 2 ist.

Die Umsetzung erfolgt vorzugsweise bei Temperaturen von 120 bis 250°C in Gegenwart von sauren Katalysatoren, wie z.B. p-Toluolsulfonsäure, basischen Katalysatoren, wie z.B. Alkalialkoholaten oder Metallkatalysatoren, wie z.B. Dibutylzinnoxid, SnCl₂, Sn(II)carboxylaten, oder Übergangsmetallsalzen.

Die erfindungsgemäß verwendeten aminofunktionellen Silikone können auch durch polymeranaloge Hydrosilylierung von SiH-funktionellen Silikonen mit ungesättigten Aminen, vorzugsweise Allylamin, hergestellt werden.

Das Aminäquivalentgewicht der erfindungsgemäßen asparaginsäureesterfunktionellen Silikone und der als Edukte verwendeten aminofunktionellen Silikone beträgt 1000 bis 50000 g/Val, vorzugsweise 4000 bis 20000 g/Val. Das Molgewicht der asparaginsäureesterfunktionellen Silikone beträgt 2000 bis 5000000 g/Mol, vorzugsweise 20000 bis 2000000 g/Mol.

Die Herstellung der asparaginsäureesterfunktionellen Silikone erfolgt dadurch, dass man aminofunktionelle Silikone mit Verbindungen der. Formel (I) umsetzt.

Das Molverhältnis Aminogruppen zu Verbindungen der Formel (I) beträgt 1:1 bis 1:20, vorzugsweise 1:2 bis 1:10, die Reaktion wird 1 bis 10 Stunden bei 80 bis 220°C durchgeführt, vorzugsweise in Abwesenheit von Lösungsmitteln oder Katalysatoren, wobei anschließend der Überschuss an Verbindungen der Formel (I) bei einem Druck von 1 bis 100 mbar und Temperaturen von 150 bis 250°C abdestilliert wird. Die Aminofunktionalisierung der offenkettigen Siloxane und/oder zyklischen Oligosiloxane mit Aminosilanen und die anschließende Umsetzung mit Verbindungen der Formel (I) wird in einer bevorzugten Ausführungsform in einer Eintopfreaktion nacheinander durchgeführt.

Im Falle der Verwendung von Aminopropylmethyldiethoxysilan als Aminosilan für die Aminofunktionalisierung und Maleinsäurediethylester als Verbindung der Formel (I) erhält man ein asparaginsäureesterfunktionelles Silikon, das folgende Struktureinheit enthält:

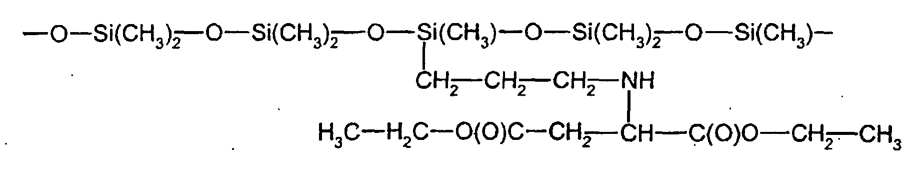

Die erfindungsgemäßen asparaginsäureesterfunktionellen Silikone können als Weichblöcke oder Schlagzähmodifikatoren für Kunststoffe eingesetzt werden.

Erfindungsgemäß als Reaktionspartner für die asparaginsäureesterfunktionellen Silikone geeignete aromatische Polycarbonate sind solche auf Basis der Diphenole der Formel (III) 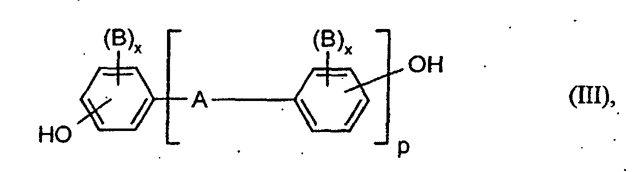 worin
- A: eine Einfachbindung, C₁-C₅-Alkylen, C₂-C₅-Alkyliden, C₅-C₆-Cycloalkyliden, - S- oder -SO₂-,
- B: Chlor, Brom
- x: 0, 1 oder 2 und
- p: 1 oder 0 sind
oder alkylsubstituierte Dihydroxyphenylcycloalkane der Formel (IV), 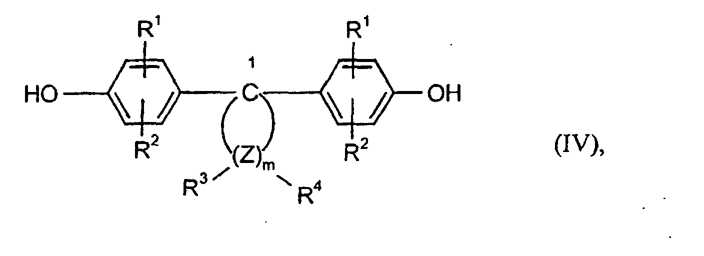 worin
R¹ und R² unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
   - m: eine ganze Zahl von 4 bis 7, bevorzugt 4 oder 5,
R³ und R⁴ für jedes Z individuell wählbar, unabhängig voneinander Wasserstoff oder C₁-C₆-Alkyl
   und
   - Z: Kohlenstoff bedeuten, mit der Maßgabe, dass an mindestens einem Atom ZR³ und R⁴ gleichzeitig Alkyl bedeuten.

Beispielsweise seien Hydrochinon, Resorcin, Dihydroxydiphenyl, Bis-(hydroxyphenyl)-alkane, Bis-(hydroxyphenyl)-cycloalkane, Bis-(hydroxyphenyl)-sulfide, -ether, -ketone, -sulfoxide, -sulfone und a,a-Bis-(hydroxyphenyl)-diisopropylbenzole sowie deren kernalkylierte und kernhalogenierte Verbindungen genannt.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050 sowie in der Monographie "H. Schnell, Chemistry and Physics of Polycarbonates, Interscience Publishers, New York, 1964" beschrieben.

Bevorzugte Diphenole sind
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
α,α'-Bis-(3,5-dimethyl-4-hydroxyphenyl)-p-diisopropyl-benzol,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methyl-cyclohexan,
2,2-Bis-(3,5-dichlor-4-hydroxyphenyl)-propan und
2,2-Bis-(3,5-dibrom-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphcny )-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

1,1-Bis-(4-hydroxyphenyl)-3,3,5-trimethylcyclohexan,
1,1-Bis-(4-hydroxyphenyl)-3-methylcyclohexan,
1,1-Bis-(3,5-dimethyl-4-hydroxyphenyl)-4-methylcyclohexan.

Insbesondere ist 2,2-Bis-(4-hydroxyphenyl)-propan und 1,1 -Bis-(4-hydroxyphenyl)-3,3,5-trimethylcyclohexan bevorzugt.

Es können auch beliebige Mischungen der vorgenannten Diphenole verwendet werden.

Zwecks Verbesserung des Fließverhaltens können auch geringe Mengen, vorzugsweise Mengen zwischen 0,05 und 2,0 Mol-% (bezogen auf Mole an eingesetzten Diphenolen), an tri- oder mehr als trifünktionellen Verbindungen, insbesondere solchen mit drei oder mehr als drei phenolischen Hydroxylgruppen in bekannter Weise mitverwendet werden. Einige der verwendbaren Verbindungen mit drei oder mehr als drei phenolischen Hydroxylgruppen sind beispielsweise 1,3,5-Tri-(4-hydroxyphenyl)-benzol, 1,1,1-Tri-(4-hydroxyphenyl)-ethan, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenylisopropyl)-phenyl)-ortho-terephthalsäureester, Tetra-(4-hydroxyphenyl)-methan und 1,4-Bis-(4',4"-dihydroxytriphenyl)-methyl)-benzol. Einige der sonstigen dreifünktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol.

Die Herstellung der erfindungsgemäßen Blockpolycarbonate kann im wesentlichen nach dem bekannten Lösungsverfahren in disperser Phase (sogenanntes Zweiphasengrenzflächenverfahren) (vgl. H. Schnell, "Chemistry and Physics of Polycarbonates", Polymer Review, Vol. IX, Seite 27 ff., Interscience Publ. 1964) erfolgen:

Hierbei werden die einzusetzenden Diphenole in wässriger alkalischer Phase gelöst. Dazu werden die zur Herstellung der erfindungsgemäßen Polycarbonate erforderlichen Kettenabbrecher in Mengen von 1 bis 20 Mol-%, bezogen auf Mole Diphenol, in einem organischen Lösungsmittel gelöst oder in Substanz, zugegeben. Dann wird in Gegenwart einer inerten, vorzugsweise Polycarbonat-lösenden, organischen Phase mit Phosgen umgesetzt. Die Reaktionstemperatur liegt zwischen 0°C und 40°C. Die Polyisobutylen-α-halogen-ketocarbonsäuren werden in gewünschter Menge der Reaktion zugesetzt als Reinsubstanz oder im die organische Phase bildenden Lösemittel gelöst.

Ein weiterer Gegenstand der Erfindung ist ein Verfahren zur Herstellung von aromatischen Polycarbonaten, enthaltend asparaginsäureesterfünktionelle Silikone, dadurch gekennzeichnet, dass aromatische Polycarbonate mit asparaginsäureesterfünktionellen Silikonen in Lösung oder in der Schmelze zur Reaktion gebracht werden.

Hierbei können Lösungen der Reaktanden in Lösungsmitteln mit einem Siedepunkt größer 100°C gemischt, dic Mischung auf Rückfluss erhitzt und das Reaktionsgemisch durch Fällung oder Sprühverdampfung aufgearbeitet werden.

Ferner können die Reaktanden gelöst, gemischt und in Ausdampfextrudem eingedampft werden. Diese Vorgehensweise ist die bevorzugte Ausführungsform der Erfindung.

Die Reaktanden können auch in der Schmelze in Knetern oder Extrudern bei Temperaturen von 170 bis 330°C gemischt werden.

Ein weiterer Gegenstand der Erfindung ist ein Verfahren zur Herstellung von aromatischen Polycarbonaten, enthaltend asparaginsaureesterfunktionelle Silikone, dadurch gekennzeichnet, dass Bisphenole und asparaginsäureesterfunktionelle Silikone, gegebenenfalls in Gegenwart von Kettenabbrechern und/oder Verzweigern mit Kohlensäurederivaten zur Reaktion gebracht werden.

Bei der Ausführung dieses crfindungsgemäßen Verfahrens werden Methoden angewandt, die oben bei der Herstellung der aromatischen Polycarbonate beschrieben wurden, wobei eine solche Menge asparaginsäureesterfunktionelle Silikone zugegen wird, dass der Gehalt 1 bis 30 Gew.-%, vorzugsweise 5 bis 15 Gew.-% beträgt.

Den erfindungsgemäßen aromatischen Polycarbonaten können noch vor oder nach ihrer Verarbeitung die für thermoplastische Polycarbonate üblichen Additive wie Stabilisatoren, Entformungsmittel, Pigmente, Flammschutzmittel, Antistatika, Füllstoffe und Verstärkungsstoffe in den üblichen Mengen zugesetzt werden.

Die erfindungsgemäßen aromatischen Polycarbonate können zu Formkörpern verarbeitet werden, indem man beispielsweise die in bekannter Weise isolierten aromatischen Polycarbonate zu Granulat extrudiert und dieses Granulat gegebenenfalls nach Zusatz der obengenannten Additive durch Spritzguss zu verschiedenen Artikeln in bekannter Weise verarbeitet.

Die erfindungsgemäßen aromatischen Polycarbonate sind als Formkörper überall dort einsetzbar, wo die bislang bekannten Polycarbonate eingesetzt wurden, also beispielsweise im Elektrosektor sowie im Bausektor, und zwar dann, wenn erhöhte Chemikalienbeständigkeit verlangt wird.

Beispiele für Verwendungen sind Folien, Verbundfolien, Extrusions- und Spritzgussformteile mit und ohne Füllstoffe bzw. Glasfaserverstärkung wie z.B. Sicherheitshelme, Schaumstoffe, Plattenware und Blaskörper, sowie medizinische Artikel, wie Schläuche und Kurzzeitimplantate.

Die erfindungsgemäßen aromatischen Polycarbonate dienen weiterhin als Blendpartner für thermoplastische Formmassen.

### Beispiele

### Beispiel 1 (Herstellung des asparaginsäureesterfunktionellen Silikons

Man versetzt 1000 g Polydimethylsiloxan mit einer Molmasse von ca. 400000 g/Mol mit 20 g Aminopropyldiethoxysilan und 0,2 g Dibutylzinnoxid und erhitzt 4 h auf 200°C. Dann werden 100 g Diethylfumarat zugegeben, auf 100°C abgekühlt und 3 h weiter gerührt. Dann wird ein Vakuum von 20 mbar angelegt und das überschüssige Diethylfumarat abdestilliert, wobei am Ende der Destillation kurz auf 200°C erhitzt wird. Das Produkt wurde NMR-spektroskopisch charakterisiert.

### Biespiel 2

Man löst 495 g des Produktes aus Beispiel 1 in 500 g Methylenchlorid und gibt diese Lösung zur Lösung von 4455 g Polycarbonat mit einer relativen Lösungsviskosität von 1,28 (0,5 % in Methylenchlorid, 25°C) in 2 Methylenchlorid und 101 Chlorbenzol. Das Gemisch wird auf einem Ausdampfextruder mit Vakuumdom (ZSK 32) bei 260 bis 280°C eingedampft. Man erhält 4480 g eines mit asparaginsäureesterfunktionellem Silikon modifizierten Polycarbonats mit einer relativen Lösungsviskosität von 1,29, einem MVI von 12, und einem Zäh/Spröd-Übergang im Kerbschlagversuch von -50°C. Die ESC-Stabilität wurde durch Tauchung eines vorgespannten Stabs in Isooctan-Toluol bestimmt und die Schlagzähigkeit nach Ablüften (1 h Raumtemperatur und 1 h 100°C) gemessen.

### Randfaserdehnung

0,6 % 30 s Tauchung: 3x n.g., 97 kJ/m², keine Risse
1,0 % 30 s Tauchung: 1 x n.g., 93 kJ/m², keine Risse
0,6 % 5 min Tauchung: 89 kJ/m², keine Risse
1,0 % 5 min Tauchung: 80 kJ/m², keine Risse.

### Beispiel 3

Es werden 7999 g 45 proz. NaOH, 36 kg Wasser, 4109 g Bisphenol A und 81 g p-tert.-Butylphenol vorgelegt, 508 g des Produktes aus Beispiel 1 gelöst in 450 g Methylenchlorid, 10 l Chlorbenzol und 27 l Methylenchlorid zugegeben und bei 20°C 2700 g Phosgen eingeleitet: Man gibt 25 ml N-Ethylpiperidin zu und rührt noch 1 h. Es wird mit HCl angesäuert, die Phasen getrennt und die organische Phase neutral gewaschen. Man dampft auf einem Ausdampfextruder mit Vakuumdom (ZSK 32) bei 260 bis 280°C ein. Man erhält 4,28 kg eines mit asparaginsäureesterfunktionellem Silikon modifizierten Polycarbonats mit einer relativen Lösungsviskosität von 1,30, einem MVI von 6, und einem Zäh/Spröd-Übergang im Kerbschlagversuch von -40°C. Die ESC-Stabilität wurde durch Tauchung eines vorgespannten Stabs in Isooctan-Toluol bestimmt und die Schlagzähigkeit nach Ablüften (1 h Raumtemperatur und 1 h 100°C) gemessen.

### Randfaserdehnung:

0,6 % 30 s Tauchung: 3x n.g., 96 kJ/m², Kantenrisse
1,0 % 30 s Täuchung: 1x n.g., 92 kJ/m², Kantenrisse
0,6 % 5 min Tauchung: 5 kJ/m², Querrisse
1,0 % 5 min Tauchung: 4 kJ/m², Querrisse.

### Vergleich 1

Polycarbonat mit einer relativen Lösungsviskosität von 1,28 zeigt einen MVI von 6, einen Zäh/Spröd-Übergang von +10°C und folgendes ESC-Verhalten:
0,6 % 30 s Tauchung: 3 kJ/m², Oberflächenrisse
1,0 % 30 s Tauchung: 2 kJ/m², Querrisse
0,6 % 5 min Tauchung: zerbrochen
1,0 % 5 min Tauchung: zerbrochen

Die Versuche zeigen, dass das durch Lösungscompoundierung gewonnene Produkt nach Beispiel 2 das beste Eigenschaftsniveau in allen untersuchten Eigenschaften (Fließfähigkeit, Tieftemperaturkerbschlagzähigkeit, ESC-Verhalten) die besten Eigenschaften aufweist. Das durch Einbau während der Synthese gewonnene Produkt nach Beispiel 3 ist üblichen Polycarbonat (Vergleich 1) überlegen, erreicht aber nicht die Eigenschaften des durch Compoundierung hergestellten Produktes nach Beispiel 2.

## Patentansprüche

1. Aromatische Polycarbonate enthaltend 1 bis 30 Gew.-% asparaginsäureesterfunktionelle Silikone.

2. Aromatische Polycarbonate nach Anspruch 1 enthaltend 5 bis 15 Gew.-% asparaginsäureesterfunktionelle Silikone.

3. Verfahren zur Herstellung von aromatischen Polycarbonaten, enthaltend asparaginsäureesterfünktionelle Silikone, **dadurch gekennzeichnet, dass** Bisphenole und asparaginsäureesterfünktionelle Silikone in Gegenwart von Kettenabbrechem und/oder Verzweigem mit Kohlensäurederivaten zur Reaktion gebracht werden, oder aromatische Polycarbonate mit asparaginsäureesterfunktionellen Silikonen in Lösung oder in der Schmelze zur Reaktion gebracht werden.

4. Verwendung der Polycarbonate wie in Anspruch 1 definiert zur Herstellung von Formkörpern.

5. Formkörper hergestellt aus Polycarbonat wie in Anspruch 1 definiert.

6. Verwendung der Polycarbonate wie in Anspruch 1 definiert als Blendpartner für thermoplastische Formmassen.

7. Formmassen enthaltend Polycarbonat wie in Anspruch 1 definiert.

8. Polycarbonat erhältlich durch Umsetzung von Bisphenolen, asparaginsäureesterfünktionellen Silikonen und Kohlensäurederivaten nach dem Phasengrenzflächenverfahren.

9. Polycarbonat erhältlich durch Reaktion von aromatischen Polycarbonaten mit asparaginsäureesterfunktionellen Silikonen in Lösung oder in der Schmelze.

10. Asparaginsäureesterfünktionelle Silikone, erhältlich durch Addition von Fumarsäureester und/oder Maleinsäureestem der Formel (I)
ROOC-CH=CH-COOR (I),
wobei
R für einen C₁-C₄-Alkyl- oder Alkenylrest steht,
an aminofunktionalisierte Silikone.

11. Asparaginsäureesterfunktionelle Silikone nach Anspruch 10 mit Aminäquivalentgewichten von 1000 bis 50000 g/Val.

12. Verfahren zur Herstellung asparaginsäureesterfunktioneller Silikone, **dadurch gekennzeichnet, dass** man aminofunktionelle Silikone mit Verbindungen der Formel (I), wie in Anspruch 10 definiert, umsetzt, wobei das Verhältnis der Zahl der Aminogruppen zur Zahl der Moleküle der Formel (I) mindestens 1:1 bis 1:20 ist.

13. Verfahren zur Herstellung asparaginsäureesterfunktioneller Silikone, **dadurch gekennzeichnet, dass** man offenkettige Siloxane und/oder zyklische Oligosiloxane, bei denen mindestens 45 % bis 100 % der Substituenten an den Siloxangruppen Methylgruppen sind und der Rest vorzugsweise Phenylgruppen sind, mit Aminosilanen, vorzugsweise mit Aminosilanen der Formel (II)
H₂N-X-Si(OR)ₙ(CH₃)₃₋ₙ (II),
wobei
R der oben angegebenen Bedeutung entspricht,
X ein zweiwertiger organischer Rest mit 2 bis 22 Kohlenstoffatomen, bevorzugt C₂-C₂₂-Alkylengruppen, vorzugsweise -CH₂-CH₂-CH₂- ist und
n 1 oder 2 oder 3, vorzugsweise 2 oder 3, ganz besonders bevorzugt 2 ist,
umsetzt und anschließend ohne Isolierung der resultierenden aminofunktionellen Silikone mit Verbindungen der Formel (I) umsetzt.

14. Verwendung von asparaginsäureesterfunktionellen Silikonen wie in Anspruch 10 definiert zur Herstellung von Polycarbonaten.

## Claims

1. Aromatic polycarbonates containing 1 to 30 wt.% aspartate-functional silicones.

2. Aromatic polycarbonates according to Claim 1 containing 5 to 15 wt.% aspartate-functional silicones.

3. A process for producing aromatic polycarbonates containing aspartate-functional silicones, **characterised in that** bisphenols and aspartate-functional silicones are caused to react with derivatives of carbonic acid in the presence of chain-terminators and/or branching agents, or aromatic polycarbonates are caused to react with aspartate-functional silicones in solution or in a melt.

4. Use of the polycarbonates as defined in Claim 1 for the production of moulded bodies.

5. Moulded bodies produced from polycarbonate as defined in Claim 1.

6. Use of the polycarbonates as defined in Claim 1 as blend components for thermoplastic moulding compositions.

7. Moulding compositions containing polycarbonate as defined in Claim 1.

8. Polycarbonate, obtainable by conversion of bisphenols, aspartate-functional silicones and derivatives of carbonic acid by the phase interface process.

9. Polycarbonate, obtainable by reaction of aromatic polycarbonates with aspartate-functional silicones in solution or in a melt.

10. Aspartate-functional silicones, obtainable by addition of fumarate and/or maleates of the formula (I)
ROOC-CH=CH-COOR (I)
where
R stands for a C₁-C₄ alkyl or alkenyl residue
onto amino-functionalised silicones.

11. Aspartate-functional silicones according to Claim 10 with amine equivalent weights from 1,000 to 50,000 g/g. equiv..

12. A process for producing aspartate-functional silicones, **characterised in that** amino-functional silicones are converted with compounds of the formula (I), as defined in Claim 10, the ratio of the number of amino groups to the number of molecules of the formula (I) being at least 1:1 to 1:20.

13. A process for producing aspartate-functional silicones, **characterised in that** open-chain siloxanes and/or cyclic oligosiloxanes, in which 45 to 100 % of the substituents on the siloxane groups are methyl groups and the remainder are preferably phenyl groups, are converted with aminosilanes, preferably with aminosilanes of the formula (II)
H₂N-X-Si(OR)ₙ(CH₃)₃₋ₙ (II)
where
R conforms to the meaning stated above,
X is a divalent organic residue with 2 to 22 carbon atoms, preferentially C₂-C₂₂ alkylene groups, preferably -CH₂-CH₂-CH₂- and
n is 1 or 2 or 3, preferably 2 or 3, with 2 being quite particularly preferred,
and are subsequently converted with compounds of the formula (I) without isolation of the resulting amino-functional silicones.

14. Use of aspartate-functional silicones as defined in Claim 10 for the production of polycarbonates.

## Revendications

1. Polycarbonates aromatiques contenant 1 à 30% en poids de silicone à fonction ester d'acide aspartique.

2. Polycarbonates aromatiques suivant la revendication 1, contenant 5 à 15% en poids de silicone à fonction ester d'acide aspartique.

3. Procédé de préparation de polycarbonates aromatiques contenant du silicone à fonction ester d'acide aspartique, **caractérisé en ce que** l'on fait réagir le bisphénol et le silicone à fonction ester d'acide aspartique en présence d'interrupteurs de chaine et/ou d'agents de ramification, avec des dérivés de l'acide carbonique ou on fait réagir les polycarbonates aromatiques avec des silicones à fonction ester d'acide aspartique en solution ou dans la masse fondue.

4. Utilisation du polycarbonate tel que défini à la revendication 1, pour la préparation d'articles moulés.

5. Article moulé préparé à partir des polycarbonates tels que définis à la revendication 1.

6. Utilisation du polycarbonate tel que défini à la revendication 1, comme partenaire de mélange pour des matières à mouler thermoplastiques.

7. Matières à mouler contenant le polycarbonate tel que défini à la revendication 1.

8. Polycarbonate accessible par réaction de bisphénols, de silicones à fonction ester d'acide aspartique et de dérivés de l'acide carbonique par un procédé à l'interface.

9. Polycarbonate accessible par réaction de polycarbonates aromatiques avec des silicones à fonction ester d'acide aspartique en solution ou dans la masse fondue.

10. Silicones à fonction ester d'acide aspartique, accessibles par addition d'ester d'acide fumarique et/ou d'ester d'acide maléique de la formule (I) :
ROOC-CH=CH-COOR (I)
où
R représente un reste alcoyle en alcoylène en C₁-C₄,
sur une silicone à fonction amino.

11. Silicones à fonction ester d'acide aspartique suivant la revendication 10, avec un poids équivalent d'aminé allant de 1000 à 50 000 g/val.

12. Procédé de préparation de silicones à fonction ester d'acide aspartique, **caractérisé en ce que** l'on fait réagir les silicones à fonction amino avec des composés de la formule I, tels que définis à la revendication 10, où le rapport du nombre de radicaux amino au nombre de molécule de la formule (I) se situe dans l'intervalle allant d'au moins 1:1 à 1:20.

13. Procédé de préparation de silicones à fonction ester d'acide aspartique, **caractérisé en ce que** l'on fait réagir des siloxanes à chaine ouverte et/ou des oligosiloxanes cycliques, dans lesquels au moins 45% à 100% des substituants sur les radicaux siloxane sont des radicaux méthyle et le reste est de préférence, des radicaux phényle, avec des aminosilanes, de préférence des aminosilanes de la formule (II) :
H₂N-X-Si(OR)ₙ(CH₃)₃₋ₙ (II)
où
R correspond à la signification indiquée cidessus,
X est un reste organique bivalent avec 2 à 22 atomes de carbone, de préférence des radicaux alcoylène en C₂-C₂₂, de préférence -CH₂-CH₂-CH₂-, et
n est 1 ou 2 ou 3, de préférence 2 ou 3, de manière tout particulièrement préférée, 2,
et ensuite, on fait réagir avec les composés de la formule (I), sans isolement des silicones à fonction amino résultantes.

14. Utilisation de silicones à fonction ester d'acide aspartique, telles que définies à la revendication 10, pour la préparation de polycarbonates.
